(19)

Europäisches
Patentamt
European
Patent Office
Office européen
des brevets

(11) **EP 3 940 552 A1**

(12) **EUROPEAN PATENT APPLICATION**
published in accordance with Art. 153(4) EPC

(43) Date of publication:
**19.01.2022 Bulletin 2022/03**

(21) Application number: **20913065.7**

(22) Date of filing: **25.11.2020**

(51) Int Cl.:
***G06F 16/29*** (2019.01)

(86) International application number:
**PCT/CN2020/131305**

(87) International publication number:
**WO 2021/232724 (25.11.2021 Gazette 2021/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.05.2020 CN 202010438214**

(71) Applicant: **Baidu Online Network Technology
(Beijing)
Co., Ltd.
Beijing 100085 (CN)**

(72) Inventors:
• **HUANG, Jizhou**
  **Beijing 100085 (CN)**
• **WANG, Haifeng**
  **Beijing 100085 (CN)**
• **ZHANG, Wei**
  **Beijing 100085 (CN)**
• **FAN, Miao**
  **Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD FOR EXTRACTING GEOGRAPHIC LOCATION POINT SPATIAL RELATIONSHIP,
METHOD FOR TRAINING EXTRACTION MODEL, AND DEVICES**

(57)     The present disclosure provides a method for extracting a geographic location point spatial relationship, and a method and apparatus for training an extracting model, and relates to the technical field of big data. A specific implementation solution is: obtaining second training data which include: a text, and marks of a geographic location point and geographic location point spatial relationship information in the text; training a geographic location point spatial relationship extracting model with the second training data, the geographic location point spatial relationship extracting model comprising an embedding layer, a transformer layer and a mapping layer; wherein the geographic location point spatial relationship extracting model is used to extract the geographic location point spatial relationship information from the input Internet text. In the present disclosure, it is possible to extract the geographic location point spatial relationship information from the Internet text, solve the problem of inaccuracy of the spatial relationship caused by an error of coordinates of the geographic location point, or the problem that the floor relationship cannot be automatically generated.

```
┌─────────────────────────────────────┐  501
│ Obtain first training data which include: a text and │
│ marks of a geographic location point and a │
│ geographic location point spatial relationship in the │
│ text │
└─────────────────────────────────────┘
                  │
                  ▼
┌─────────────────────────────────────┐  502
│ Use the first training data to train a pre-training │
│ model, the pre-training model including an │
│ embedding layer, a transformer layer and at least │
│ one task layer │
└─────────────────────────────────────┘
                  │
                  ▼
┌─────────────────────────────────────┐  503
│ Obtain second training data which include: a text, │
│ and marks of a geographic location point and a │
│ type and a value of the geographic location point │
│ spatial relationship in the text │
└─────────────────────────────────────┘
                  │
                  ▼
┌─────────────────────────────────────┐  504
│ Train the obtained embedding layer and │
│ transformer layer based on pre-training model, │
│ train geographic location point spatial relationship │
│ extracting model with second training data, the │
│ extracting model including embedding layer, │
│ transformer layer and mapping layer │
└─────────────────────────────────────┘
```

FIG. 5

EP 3 940 552 A1

## Description

The present disclosure claims priority to the Chinese patent application No. 2020104382142 entitled "Method for Extracting Geographic Location Point Spatial Relationship, and Method and Apparatus for Training an Extraction Model" filed on the filing date May 21, 2020, the entire disclosure of which is hereby incorporated by reference in its entirety.

## Field of the Disclosure

The present disclosure relates to the technical field of computer application, and particularly to the technical field of big data.

## Background of the Disclosure

A main purpose of a map is to depict a real world and make a user's travel simpler. A high-precision knowledge graph of geographic location points is a basis for satisfying the user's kernel demands such as finding a location point in the map and travel. The geographic location point spatial relationship is one of requisite factors of the knowledge graph and may achieve more accurate logic reasoning query.

At present, a method of mining the geographic location point spatial relationship is automatically generating the spatial relationship using coordinates of the geographic location point, but this method depends on the accuracy of the coordinates. An error of the coordinates of the geographic location point is generally over tens of meters even a hundred meters, which causes the geographic location point spatial relationship generated by this method inaccurate. Especially, the floor relationship cannot be automatically generated by the coordinates.

## Summary of the Disclosure

In view of the above, the present disclosure solves the above technical problems in the prior art through the following technical solutions.

In a first aspect, the present disclosure provides a method for training a geographic location point spatial relationship extracting model, the method including:

obtaining second training data which include: a text, and marks of a geographic location point and geographic location point spatial relationship information in the text;

training a geographic location point spatial relationship extracting model with the second training data, the geographic location point spatial relationship extracting model including an embedding layer, a transformer layer and a mapping layer;

the geographic location point spatial relationship extracting model is used to extract the geographic location point spatial relationship information from the input Internet text.

In a second aspect, the present disclosure further provides a method for extracting a geographic location point spatial relationship, the method including:

obtaining a text containing geographic location point information from the Internet;

inputting the text into a geographic location point spatial relationship extracting model obtained by pre-training, to obtain information of the spatial relationship output by the geographic location point spatial relationship extracting model; wherein the geographic location point spatial relationship extracting model includes: an embedding layer, a transformer layer and a mapping layer.

In a third aspect, the present disclosure provides an apparatus for training a geographic location point spatial relationship extracting model, the apparatus including:

a second obtaining unit configured to obtain second training data which include: a text, and marks of a geographic location point and geographic location point spatial relationship information in the text;

a second training unit configured to train a geographic location point spatial relationship extracting model with the second training data, the geographic location point spatial relationship extracting model including an embedding layer, a transformer layer and a mapping layer;

the geographic location point spatial relationship extracting model is used to extract the geographic location point spatial relationship information from the input text.

In a fourth aspect, the present disclosure further provides an apparatus for extracting a geographic location point spatial relationship, the apparatus including:

an obtaining unit configured to obtain a text containing geographic location point information from the Internet;
an extracting unit configured to input the text into a geographic location point spatial relationship extracting model obtained by pre-training, to obtain information of the spatial relationship output by the geographic location point spatial relationship extracting model; wherein the geographic location point spatial relationship extracting model includes: an embedding layer, a transformer layer and a mapping layer.

In a fifth aspect, the present disclosure provides an electronic device, including:

at least one processor; and
a memory communicatively connected with the at least one processor; wherein,
the memory stores instructions executable by the at least one processor, and the instructions are executed by the at least one processor to enable the at least one processor to execute the method according to any of the above first and second aspects.

In a sixth aspect, the present disclosure further provides a non-transitory computer-readable storage medium storing computer instructions therein, wherein the computer instructions are used to cause the computer to execute the method according to any of the above first and second aspects.

As can be seen from the above technical solutions, in the present disclosure, it is possible to extract the geographic location point spatial relationship information from the Internet text, solve the problem of inaccuracy of the spatial relationship caused by an error of coordinates of the geographic location point, or the problem that the floor relationship cannot be automatically generated.

Other effects of the above optional modes will be described below in conjunction with specific embodiments.

**Brief Description of Drawings**

The figures are intended to facilitate understanding the solutions, not to limit the present disclosure. In the figures,

FIG. 1 illustrates an exemplary system architecture to which methods or apparatuses of embodiments of the present disclosure may be applied;
FIG. 2 illustrates a flow chart of a method for extracting a geographic location point spatial relationship according to Embodiment 1 of the present disclosure;
FIG. 3 illustrates a structural schematic diagram of a geographic location point spatial relationship extracting model according to Embodiment 1 of the present disclosure;
FIG. 4 illustrates a flow chart of a method for training a geographic location point spatial relationship extracting model according to Embodiment 2 of the present disclosure;
FIG. 5 illustrates a flow chart of a method for training a geographic location point spatial relationship extracting model according to Embodiment 3 of the present disclosure;
FIG. 6A illustrates a structural schematic diagram of a pre-training model according to Embodiment 3 of the present disclosure;
FIG. 6B illustrates a structural schematic diagram of a geographic location point spatial relationship extracting model according to Embodiment 3 of the present disclosure;
FIG. 7 illustrates a structural schematic diagram of an apparatus for training a geographic location point spatial relationship extracting model according to Embodiment 4 of the present disclosure;
FIG. 8 illustrates a structural schematic diagram of an apparatus for extracting a geographic location point spatial relationship according to Embodiment 5 of the present disclosure;
FIG. 9 illustrates a block diagram of an electronic device for implementing embodiments of the present disclosure.

**Detailed Description of Preferred Embodiments**

Exemplary embodiments of the present disclosure are described below with reference to the accompanying drawings, include various details of the embodiments of the present disclosure to facilitate understanding, and should be considered as being only exemplary. Therefore, those having ordinary skill in the art should recognize that various changes and modifications can be made to the embodiments described herein without departing from the scope and spirit of the application. Also, for the sake of clarity and conciseness, depictions of well-known functions and structures are omitted in the following description.

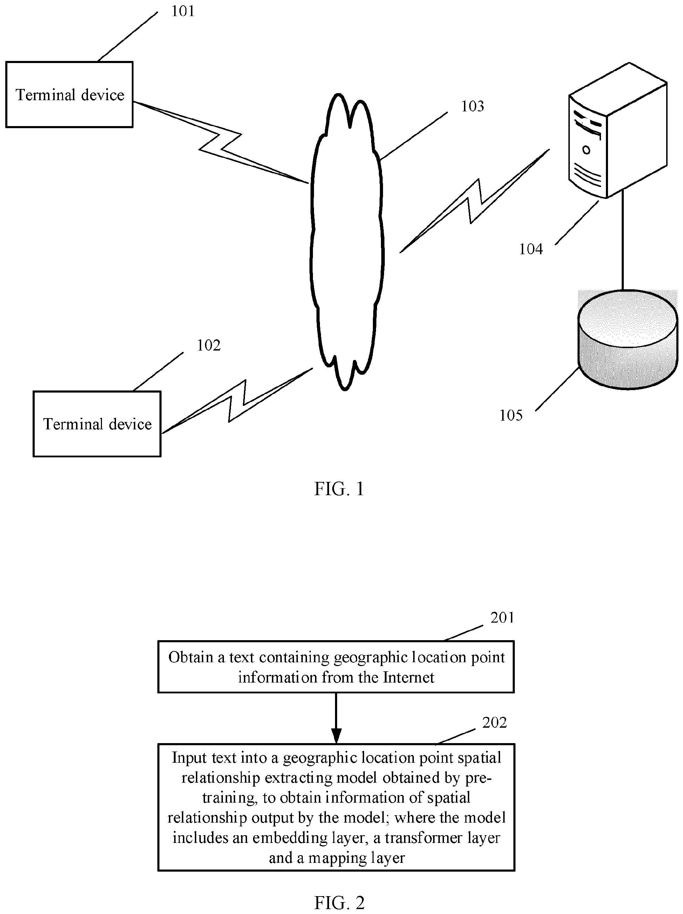

FIG. 1 illustrates an exemplary system architecture to which methods or apparatuses of embodiments of the present disclosure may be applied. As shown in FIG. 1, the system architecture may comprise terminal devices 101 and 102, a network 103 and a server 104. The network 103 is used to provide a medium for a communication link between the terminal devices 101, 102 and the server 104. The network 103 may comprise various connection types such as wired link, a wireless communication link or an optical fiber cable.

The user may use the terminal devices 101 and 102 to interact with the server #104 via the network 103. The terminal devices 101 and 102 may have various applications installed thereon, such as map-like applications, webpage browser applications, communication-type applications, etc.

The terminal devices 101 and 102 may be various user devices capable of running a map-like application, and include but not limited to smart phones, tablet computers, PCs, smart TV sets etc. The apparatus for extracting the geographic location point spatial relationship according to the present disclosure may be disposed or run in the server 104, or may run in a device independent on the server 104. The apparatus may be implemented as a plurality of software or software modules (e.g., for providing distributed service) or as a single software or software module, which will not be limited in detail herein. The server 104 may interact with a map database 105. Specifically, the server 104 may obtain data from the map database 105, or store data in the map database 105. In the map database 105 is stored map data including POI information.

For example, the apparatus for extracting geographic location point spatial relationship is disposed in and runs in the server 104, and the server 104 performs extraction of the geographic location point spatial relationship by the method according to embodiments of the present disclosure, and then uses the obtained geographic location point spatial relationship to update the map database 105. The server 104 can, in response to a query request from the terminal devices 101, 102, query the map database 105, and return information regarding the queried geographic location point to the terminal devices 101, 102, including the information generated based on the geographic location point spatial relationship.

The server 104 may be a single server or a server group consisting of a plurality of servers. In addition to the form of a server, 104 may also be other computer systems or processors having a high computing performance. It should be appreciated that the number of the terminal devices, network, server and database in FIG. 1 is only for illustration purpose. Any number of terminal devices, networks, servers and databases are feasible according to the needs in implementations.

A lot of information regarding geographic locations exists in the Internet. The information includes spatial relationship between a corresponding geographic location and other geographic locations. The geographic spatial location relationship between geographic locations may be constructed automatically from the information by using a text parsing technique. The two portions will be described in detail in conjunction with embodiments, respectively.

The geographic location points involved in the present disclosure refer to geographic location points in a map-like application. The geographic location points may be provided for query and browsing by the user and displayed to the user. These geographic location points have basic attributes such as latitude and longitude values, names, administrative address and types. The geographic location points may include but not limited to POI (Point of Interest), AOI (Area of Interest), ROI (Region of Interest) etc. POI is taken as an example to describe subsequent embodiments. POI is a term in a geographic information system and generally refers to any geographic object that may be abstracted as a point. A POI may be a house, a shop, an mail box, a bus stop, a school, a hospital or the like. A main function of the POI is to describe an object or a location of an event, thereby enhancing the capability of describing or querying the object or the location of the event.


Embodiment 1

FIG. 2 illustrates a flow chart of a method for extracting a geographic location point spatial relationship according to Embodiment 1 of the present disclosure. As shown in the figure, the method may include the following steps:
At 201, a text containing geographic location point information is obtained from the Internet.

In the present disclosure, the text containing the geographic location point information may be obtained from an official website associated with the geographic location point, for example, obtain the text "海底捞 北京市海淀区清河中街五彩城购物中心六层"("Haidilao, Floor #6, The Multicolored City Shopping Mall, Qinghezhong Road, Haidian District, Beijing") from the official website of Haidilao, or obtain the text "招商银行 北京清华园支行 海淀区清华科技，科技大厦 B 座 G 层，清华大学东门向南，200 米"("China Merchants Bank, Beijing Qinghuayuan Subbranch Bank, 200 meters to the south of eastern gate of Tsinghua University, Floor #G, Building B, Science and Technology Mansion, Tsinghua Sci-Tech Park, Haidian District") from the official website of China Merchants Bank.

The text containing the geographic location point information may also be obtained from other data sources in addition to the above data sources.

At 202, the text is input into a geographic location point spatial relationship extracting model obtained by pre-training, to obtain information of the spatial relationship output by the geographic location point spatial relationship extracting model; the geographic location point spatial relationship extracting model includes an embedding layer, a transformer layer and a mapping layer.

The information of the spatial relationship involved in the embodiments of the present disclosure may include: a type and a value of the spatial relationship. The type of the spatial relationship mainly includes some spatial relationship types in direction, e.g., east, south, west, north, southeast, northeast, southwest, northwest, left, right, upstairs, downstairs, floor, building etc. The value may include a value of the distance, a value of the floor, a value of the building etc.

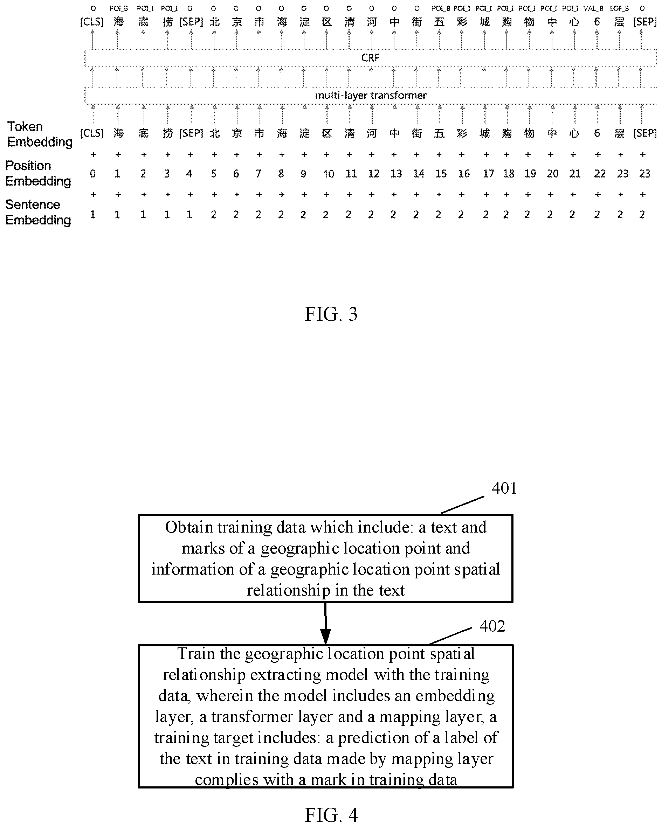

The structure of the geographic location point spatial relationship extracting model involved in the embodiments of the present disclosure may be as shown in FIG. 3. The embedding layer may include a plurality of embedding layers.

First, the text may be regarded as a sequence consisting of at least one sentence. First, a separator [CLS] may be added before the text, a separator [SEP] may be added between sentences, and each character and separator respectively serve as a token. The input sequence X may be represented as X={ $x_1$, $x_2$,..., $x_n$ }, where n represents the number of tokens, and $x_i$ represents one of the tokens. It needs to be appreciated that the embedding layer in the present disclosure serves as a token with the character as a granularity, and can effectively solve the problem of long tail keywords.

A first embedding layer is represented as Token Embedding in the figure and used to perform character encoding for tokens (elements) in the text. The tokens in the text may include characters and separators in the text.

A second embedding layer is represented as Position Embedding in the figure and used to perform position encoding for the tokens. The second embedding layer may perform position encoding for position information of the tokens in the text, for example, number positions of the tokens sequentially and perform encoding for the position numbers.

A third embedding layer is represented as Sentence Embedding in the figure and used to perform encoding for an identifier of the sentence to which each token belongs. For example, the sentences in the text are sequentially numbered, the serial numbers being taken as the identifiers of the sentences, and encoding is performed for the identifiers of the sentences to which the tokens belong.

After the above embedding layers, the tokens, position information and the identifiers of sentences are converted into density vectors. Among the vectors, $e_i$ represents a vector representation of the $i^{th}$ token, $e_{xi}$ represents a vector representation of the $i^{th}$ token as a character, and is obtained by looking up a word vector matrix and converting the character into a density vector. $e_{q_i}$ represents a vector representation of the position of the $i^{th}$ token and is obtained looking up the word vector matrix and converting the position into a density vector. $e_{s_i}$ represents a vector representation of the identifier of the sentence to which the $i^{th}$ token belongs and is obtained looking up the word vector matrix and converting the sentence representation into a density vector.

The encoding results of the respective embedding layers are output to the transformer layer (represented a multi-layer transformer in the figure), and the transformer layer performs multi-layer attention mechanism processing and then outputs implicit vectors. For example, a density vector sequence E = {$e_1$, $e_2$, ..., $e_n$} is output to the transformer layer, then what is output is an implicit vector sequence h = $\Phi_\theta(E)$ = {$h_1$, $h_2$, ...,$h_n$} containing context information, where n is an input sequence length, namely, the number of included tokens.

The mapping layer may include a CRF (Conditional Random Field) for using the implicit vectors output by the transformer layer to predict the information of the spatial relationship included in the text input into the model.

After the implicit vector sequence h={$h_1$, $h_2$, ..., $h_n$} is obtained, the CRF is used to predict a label to obtain the output Y = {$y_1$, $y_2$, ..., $y_n$} of the model, where $y_i$ is the predicted label of the input $x_i$.

A probability distribution $p_i^l$ may be obtained by the following equation for each token $x_i$:

$$p_i^l = \mathrm{softmax}(M_l^T h_i)$$

where $M_l \in \mathbb{R}^{\{d \times c\}}$, namely, a d $\times$ c dimensional vector which is a weight parameter vector, and c represents the number of the output labels.

Then, a score of the sequence may be obtained for each prediction sequence Y = {$y_1$, $y_2$, ..., $y_n$}:

$s(X, Y) = \sum_{i=1}^n p_i^{y_i} + \sum_{\{i=0\}}^n T_{y_i, y_{i+1}}$ where $T \in \mathbb{R}^{\{n \times n\}}$, representing all transition probability matrices from $y_i$ to $y_{i+1}$.

Finally, a softmax (a fully-connected layer) layer may be used to obtain a probability $P_r$ of each prediction sequence Y:

$$P_r = F(Y|X) = \frac{e^{s(X,Y)}}{\sum_{\tilde{Y}} e^{s(X,\tilde{Y})}}$$

where Y refers to any of all obtained prediction sequences.

Finally, the prediction sequence Y with a maximum probability is taken, and the prediction sequence includes prediction of the information of the geographic location point spatial relationship, including the type and value of the spatial relationship. Furthermore, the prediction sequence further includes prediction of the geographic location point. Finally, the prediction sequence may be represented as a quadruplet R=<S, O, P, A>, where S and O are geographic location points, P is a type of the spatial relationship , A is a value of the spatial relationship.

The text "海底捞 北京市海淀区清河中街五彩城购物中心六层"("Haidilao, Floor #6, The Multicolored City Shopping Mall, Qinghezhong Road, Haidian District, Beijing") is input into the geographic location point spatial relationship extracting model to extract therefrom "floor" as the type of the spatial relationship of the geographic location point "海底捞"("Haidilao") and "五彩城"("The Multicolored City"), the value of "floor" being "Floor #6". The spatial relationship may be represented as a quadruplet R=<Haidilao, The Multicolored City, Floor, Floor #6>.

The text "招商银行 北京清华园支行 海淀区清华科技园，科技大厦 B 座 G 层，清华 B G，大学东门向南 200 米"("China Merchants Bank, Beijing Qinghuayuan Subbranch Bank, 200 meters to the south of eastern gate of Tsinghua University, Floor #G, Building B, Science and Technology Mansion, Tsinghua Sci-Tech Park, Haidian District") is input into the geographic location point spatial relationship extracting model to extract therefrom "south" as the type of the spatial relationship of the geographic location point "招商银行"("China Merchants Bank") and "清华大学东门"("eastern gate of Tsinghua University"), the value being "200 meters". The spatial relationship may be represented as a quadruplet R=<China Merchants Bank, eastern gate of Tsinghua University, south, 200 meters>.

It can be seen from the above embodiment that the information of the geographic location point spatial relationship can be extracted from the text containing the geographic location point information from the Internet according to the present disclosure.

Furthermore, a set of description system indicative of the spatial relationship is defined in the present disclosure, and similar to a triplet <entity 1, entity 2, relationship> in a common knowledge-like knowledge graph, employs <geographic location point 1, geographic location point 2, a type of a spatial relationship, a value of the spatial relationship> so that the expression of the spatial relationship is more standard and unified, and systemized calculation, reasoning and storage of the spatial relationship knowledge is made possible.

During the above extraction of the information of the geographic location point spatial relationship, the geographic location point spatial relationship extracting model is one of the focuses. After the structure of the above model is learnt about, a training process of the above model will be described in detail in conjunction with embodiments.

Embodiment 2

FIG. 4 illustrates a flow chart of a method for training a geographic location point spatial relationship extracting model according to Embodiment 2 of the present disclosure. As shown in Fig. 4, the method comprises the following steps: At 401, training data is obtained, the training data including: a text and marks of a geographic location point and information of a geographic location point spatial relationship in the text.

In the present embodiment, a training sample may be built by manual marking. For example, address data is crawled from official website data associated with the geographic location, and is marked.

For example, the address data is crawled from the official website data in the official website of Haidilao, and is marked manually. For example, the address "北京市海淀区清河中街五彩城 购物中心六层"("Floor #6, The Multicolored City Shopping Mall, Qinghezhong Road, Haidian District, Beijing") is crawled from the official website of Haidilao, and is marked manually with a POI, a type and a value of the spatial relationship therein. Table 1 shows an example of marking the text:

## Table 1

| X | 北 | 京 | 市 | 海 | 淀 | 区 | 清 | 河 | 中 | 街 | 五 | 彩 | 城 | 购 | 物 | 中 | 心 | 6 | 层 |
|---|----|----|----|----|----|----|----|----|----|----|----|----|----|----|----|----|----|----|----|
| Y | O | O | O | O | O | O | O | O | O | O | POI_B | POI_I | POI_I | POI_I | POI_I | POI_I | POI_I | VAL_B | LOF_B |

where X characterizes a text, and Y characterizes marked labels. Among the labels, "O" represents an end. "O" in the embodiment of the present disclosure means not belonging to any of the POI, the type and value of the spatial relationship. "B" represents a start, for example, "POI B" represents a starting character of the POI label, "VAL B" represents a starting character of the value of the spatial relationship, and "LOF B" represents a starting character of the type of the spatial relationship. "I" represents intermediate, for example, "POI_I" represents an intermediate character of the POI label.

After marking, it can be seen that "五彩城购物中心" ( "The Multicolored City Shopping Mall") is marked with the POI label, "层 (floor)" is marked as the label of the type of the spatial relationship, and "6" is marked with the label of the value of the spatial relationship.

In addition, it is also feasible to build the training sample by manually building a text and marking the text, or acquiring a high-quality text from other data sources and marking the text.

At 402, the geographic location point spatial relationship extracting model is trained with the training data, wherein the geographic location point spatial relationship extracting model includes an embedding layer, a transformer layer and a mapping layer, and a training target includes: a prediction of a label of the text in the training data made by the mapping layer complies with a mark in the training data.

The structure of the geographic location point spatial relationship extracting model is still as shown in FIG. 3, and the embedding layer may include a plurality of embedding layers like Embodiment 1.

First, the text may be regarded as a sequence consisting of at least one sentence. First, a separator [CLS] may be added before the text, a separator [SEP] may be added between sentences, and each character and separator respectively serve as a token.

A first embedding layer is represented as Token Embedding in the figure and used to perform character encoding for tokens (elements) in the text. The tokens in the text may include characters and separators in the text.

A second embedding layer is represented as Position Embedding in the figure and used to perform position encoding for the tokens. The second embedding layer may perform position encoding for position information of the tokens in the text, for example, number positions of the tokens sequentially and perform encoding for the position numbers.

A third embedding layer is represented as Sentence Embedding in the figure and used to perform encoding for an identifier of the sentence to which each token belongs. For example, the sentences in the text are sequentially numbered, the serial numbers being taken as the identifiers of the sentences, and encoding is performed for the identifiers of the sentences to which the tokens belong.

The above three types of input may be represented as $e_i = e_{xi} \oplus e_{qi} \oplus e_{si}$. where $e_i$ represents a vector representation of the $i^{th}$ token, $e_{xi}$ represents a vector representation of the $i^{th}$ token as a character, and is obtained by looking up a word vector matrix and converting the character into a density vector. $e_{qi}$ represents a vector representation of the position of the $i^{th}$ token and is obtained looking up the word vector matrix and converting the position into a density vector. $e_{si}$ represents a vector representation of the identifier of the sentence to which the $i^{th}$ token belongs and is obtained looking up the word vector matrix and converting the sentence representation into a density vector.

The density vector representations of the encoding results of the respective embedding layers are output to the transformer layer, and the transformer layer performs multi-layer attention mechanism processing and then outputs implicit vectors. For example, a density vector sequence $E = \{e_1, e_2, ..., e_n\}$ is output to the transformer layer, then what is output is an implicit vector sequence $h = \Phi_\theta(E) = \{h_1, h_2, ..., h_n\}$ containing context information, where n is an input sequence length, namely, the number of included tokens.

The mapping layer may include a CRF for using the implicit vectors output by the transformer layer to predict information of the spatial relationship included in the text input into the model.

After the implicit vector sequence $h=\{h_1, h_2, ..., h_n\}$ is obtained, the CRF is used to predict a label to obtain the output $Y = \{y_1, y_2, ...,y_n\}$ of the model, where $y_i$ is the predicted label of the input $x_i$.

A probability distribution $p_i^l$ may be obtained by the following equation for each token $x_i$:

$$p_i^l = \mathrm{softmax}(M_l^T h_i)$$ where $M_l \in \mathbb{R}^{\{d \times c\}}$ , namely, a d $\times$ c dimensional vector which is a weight parameter vector, and c represents the number of the output labels.

Then, a score of the sequence may be obtained for each prediction sequence $Y = \{y_1, y_2, ..., y_n\}$:

$$s(X, Y) = \sum_{i=1}^{n} p_i^{y_i} + \sum_{\{i=0\}}^{n} T_{y_i, y_{i+1}}$$

where $T \in \mathbb{R}^{\{n \times n\}}$ , representing all transition probability matrices from $y_i$ to $y_{i+1}$.

Finally, a softmax (a fully-connected layer) layer may be used to obtain a probability $P_r$ of each prediction sequence Y:

$$P_r = F(Y|X) = \frac{e^{s(X,Y)}}{\sum_{\tilde{Y}} e^{s(X,\tilde{Y})}}$$

where Y refers to any of all obtained prediction sequences. In a training phase, a maximum likelihood loss function may be:

$$\mathcal{L}_\theta = \sum_i \log\left(\mathcal{F}(Y|X)\right)$$

The loss function of the entire model may be represented as:

$$\mathcal{J}(\Theta) = \mathcal{L}_\theta + \frac{\lambda}{2} \left\| \Theta \right\|^2$$

where $\Theta$ represents all parameters of the model, and $\lambda$ is a regularized hyperparameter and determined by manually adjusting parameters.

During training, the training target is actually: trying to make the prediction made by CRF for the label of the text comply with the mark in the training data. That is to say, the above loss function is used to adjust the model parameters of the embedding layers, the transformer and the CRF layer to try to minimize the value of the loss function.

Large-scale high-quality training data are needed to train a good model. The above training data simultaneously includes geographic location points and geographic location point spatial relationship information. There are little training data meeting certain requirements for quality, and such training data need to be marked manually. This makes it difficult to acquire high-quality training data. To solve the problem, embodiments of the present disclosure provide a preferred embodiment to train the geographic location point spatial relationship extracting model in a pre-training+fine-tuning manner. During the pre-training, the texts mined from the Internet may be used to constitute first training data. The requirements for the quality of these first training data are not high, so a large amount of first training data may be obtained. During the fine-tuning, second training data are constituted by manually marking with official website texts. These training data are of very high quality in a small amount, and may be further fine-tuned on the basis of model parameters obtained during the pre-training. This manner will be described in conjunction with Embodiment 3.

Embodiment 3

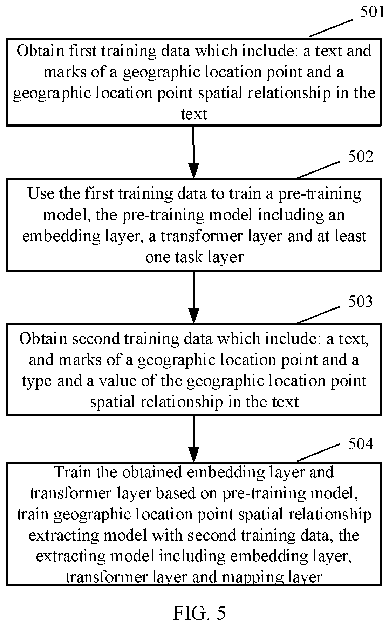

FIG. 5 illustrates a flow chart of a method for training a geographic location point spatial relationship extracting model according to Embodiment 3 of the present disclosure. As show in Fig. 5, the method comprises the following steps: At 501, first training data is obtained, the first training data including: a text and marks of a geographic location point and a geographic location point spatial relationship in the text.

As stated above, the first training data may be a text mined from the Internet and including keywords of the geographic location point and the geographic location point spatial relationship type as pre-training data. This portion of training data has a low accuracy and belongs to weakly-marked data as compared with manually precisely-marked data. The present disclosure is not limited to the specific manner of mining the text from the Internet. One of the simplest manners is to pre-build a dictionary of keywords of geographic location point spatial relationship types, and use the dictionary and names of geographic location points in the map database to match in massive texts in the Internet to thereby obtain the text. The marking of the geographic location point and the type of the geographic location point spatial relationship in the text may also be achieved based on the above dictionary and the name of the geographic location point in the map database. Since a lot of manual involvement is not needed, the first training data needed in the pre-training may be large-scale and massive data, so that requirements for training a pre-training model can be ensured.

At 502, the first training data is used to train the pre-training model, the pre-training model including an embedding layer, a transformer layer and at least one task layer.

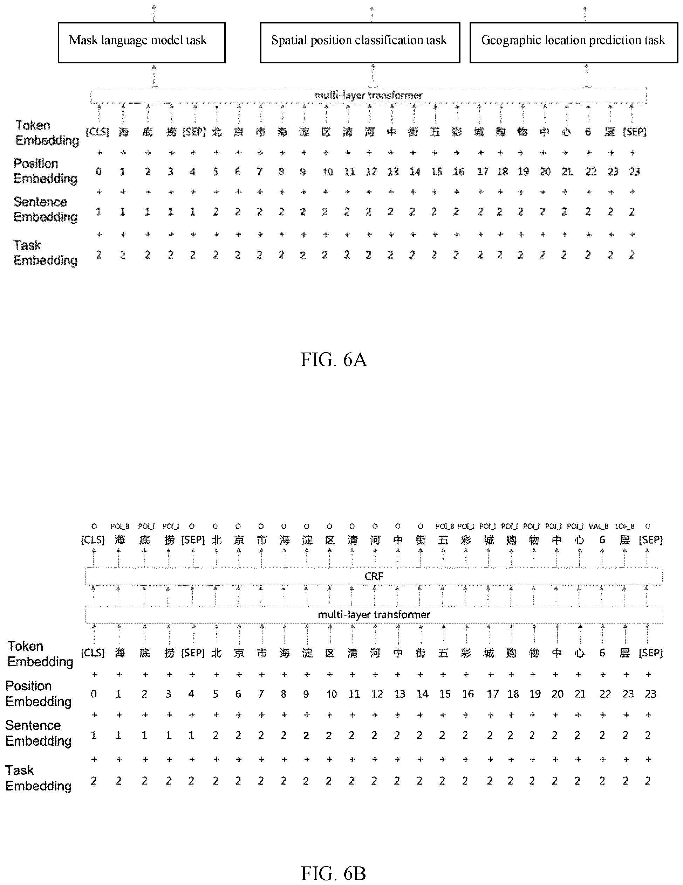

The structure of the pre-training model may be as shown in FIG. 6A. The structure and function of the embedding layer and transformer layer are similar to those in Embodiments 1 and 2. The only difference lies in that the embedding layer may further include a fourth embedding layer for encoding an identifier of a task layer to which the input text is used. The fourth embedding layer is represented as Task Embedding in the figure. The first training data will be used for subsequent different task layers in different forms. Reference will be made to depictions of subsequent steps for the depictions of the task layers. As shown in FIG. 6A, if the form of the current first training data is used for a task layer with the identifier 2, the identifiers of the task layers of the tokens are all 2.

The structures and functions of other embedding layers and transformer layer will not be detailed any more here.

The task layers will be introduced emphatically. In the present embodiment, the implicit vectors output by the transformer layer are input to the task layers. The task layers at least include at least one of a masking prediction task layer, a spatial relationship prediction task layer and a geographic location point prediction task layer.

The masking prediction task layer is used to predict content of a masked portion in the text of the first training data based on the implicit vectors output by the transformer layer, and the training target is to minimize a difference between the prediction result and actual content corresponding to the masked portion.

The text of the first training data may employ a masking character or a masking geographic location. When the text is masked, a random manner may be employed, or the user may designate a rule. For example:

Regarding the text "北京市海淀区清河中街五彩城购物中心 6 层 "("Floor #6, The Multicolored City Shopping Mall, Qinghezhong Road, Haidian District, Beijing"), if the characters are masked randomly, the following may be obtained:

"北京市海[mask] 区清河中街五彩城购[mask] 中心 6 层 (Floor #6, The Multicolored City [mask] Mall, Qinghezhong Road, Hai[mask] District, Beijing)", wherein [mask] refers to the masked portion, and actual content corresponding to the masked portion is "淀" and "物", respectively.

If the POI is masked randomly, the following may be obtained: "北京市海淀区清河中街 [mask] [mask] [mask] [mask] [mask] [mask] [mask] 6 层 ", wherein [mask] refers to the masked portion, and actual content corresponding to the masked portion is "五", "彩", "城", "购", "物", "中" and "心", respectively.

The spatial relationship prediction task layer is used to predict the spatial relationship described by the text of the first training data based on the implicit vectors output by the transformer layer, and the training target is to allow the prediction result to comply with a corresponding mark of the spatial relationship.

The task layer may predict the spatial relationship $P$ based on a text $X$, and geographic location $S$ and geographic location $O$ given in the text, with a prediction probability represented by the following equation: $P_r = F(P|X,S,O)$. The task layer may be regarded as a multi-classification task, using a cross entropy to determine a loss function.

The geographic location point prediction task layer is used to predict the geographic location point included by the text of the first training data based on the implicit vectors output by the transformer layer, and the training target is to allow the prediction result to comply with a corresponding mark of the geographic location point.

Based on the text $X$ depicting the spatial relationship of two geographic location points, one geographic location point $S$ or $O$ given in the text and the spatial relationship type $P$, the task layer predicts the other geographic location point $O$ or $S$, with a prediction probability represented by the following equation: $P_r = F(O|X,S,P)$ or $P_r = F(S|X,P,O)$. The task layer may be regarded as a multi-classification task, using a cross entropy to determine a loss function.

The above task layers may be achieved by using a full connection or classifier. Upon training of the pre-training model, the task layers are trained alternately or simultaneously. The function losses corresponding to the training targets of the trained task layers are used to optimize the model parameters of the embedding layers, the transformer layer and the trained task layers.

It can be seen that the present disclosure employs a multi-task learning manner and can share knowledge among multiple tasks, thereby obtaining a better pre-training model.

If the manner of training the task layers alternately is employed, one task layer may be sequentially or randomly selected each time, and the loss function of the selected task layer may be used each time to optimize the model parameters of the embedding layers, the transformer layer and the trained task layer.

If the manner of training the task layers simultaneously is employed, all task layers may be trained simultaneously each time, and a combined loss function may be built according to the loss function of each task layer, for example, a processing manner of performing weighted summation for the loss function of each task layer may be employed, wherein a weighting coefficient may be determined by manually adjusting parameters, e.g., by using an experimental value or empirical value. Then, the combined loss function may be used to optimize the model parameters of the embedding layers, the transformer layer and all task layers.

At 503, second training data is obtained, the second training data including: a text, and marks of a geographic location point and a type and value of the geographic location point spatial relationship in the text.

The second training data is obtained in the same way as the manner of obtaining the training data in step 401 of Embodiment 2 and will not be detailed any more here.

At 504, the obtained embedding layers and transformer layer are trained based on the pre-training model, and the geographic location point spatial relationship extracting model is trained with the second training data, the geographic location point spatial relationship extracting model including the embedding layers, the transformer layer and the mapping layer.

This step is in fact a fine-tuning stage. As for the pre-training model already trained during the pre-training, the processing of the embedding layers and the transformer layer is already sound, so the model parameters thereof already tend to be stable. In the training process of the fine-tuning stage in this step, the embedding layers and transformer layer already trained by the pre-training model may be directly used to further train the geographic location point spatial relationship extracting model, i.e., replace the above task layer with the CRF layer, and directly input the implicit vectors output by the transformer layer to the CRF layer.

In addition, in the present embodiment, the pre-training model with the structure shown in FIG. 6A is employed. If the embedding layers further comprise the Task Embedding layer, the input in the fine-tuning stage also includes the Task Embedding layer. At this time, the codes of the tasks to which the tokens belong may be any values taken randomly. The corresponding structure is as shown in FIG. 6B. Correspondingly, when the spatial relationship is extracted using the geographic location point spatial relationship extracting model after completion of training, the embedding layers also include the Task Embedding layer, and the codes of the tasks to which the tokens belong may be any values taken randomly.

The employed manually-marked high-precision training data, namely, the second training data are similar to the large-scale weakly-marked data, namely, the first training data, and the manually-marked high-precision training data has a small scale. Therefore, to reduce an overfitting risk, it is feasible to fix the model parameters of the embedding layers and the transformer layer, and only optimize (fine-tune) the model parameters of the mapping layer e.g., the CRF layer during the training process of this step.

The training principle of the geographic location point spatial relationship extracting model is similar to that descried in Embodiment 2 and will not be detailed any more here.

The method according to the present disclosure is described in detail above. An apparatus according to the present disclosure will be described below in detail in conjunction with embodiments.

Embodiment 4

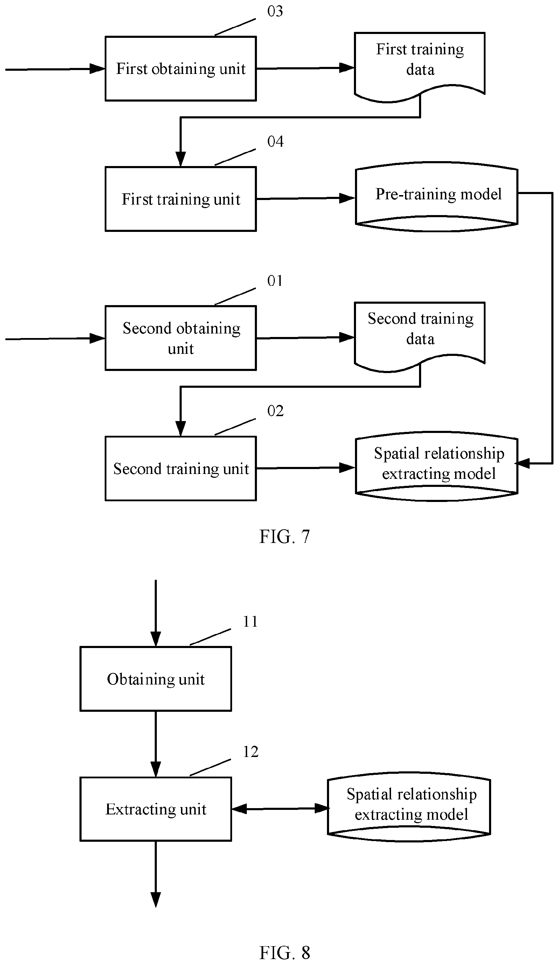

FIG. 7 illustrates a structural schematic diagram of an apparatus for training a geographic location point spatial relationship extracting model according to Embodiment 4 of the present disclosure. As shown in FIG. 7, the apparatus may include: a second obtaining unit 01 and a second training unit 02, and may further include a first obtaining unit 03 and a first training unit 04. Main functions of the units are as follows:

The second obtaining unit 01 is configured to obtain second training data, the second training data including: a text, and marks of a geographic location point and geographic location point spatial relationship information in the text.

In the present embodiment, a training sample may be built by manual marking. For example, address data is crawled from official website data associated with the geographic location, and is marked. In addition, it is also feasible to build the training sample by manually building a text and marking the text, or acquiring a high-quality text from other data sources and marking the text.

The second training unit 02 is configured to train a geographic location point spatial relationship extracting model with the second training data, the geographic location point spatial relationship extracting model including an embedding layer, a transformer layer and a mapping layer. The trained geographic location point spatial relationship extracting model is used to extract the information of the geographic location point spatial relationship from the input text.

The embedding layer includes: a first embedding layer for performing character encoding for tokens in the text, a second embedding layer for performing position encoding for the tokens, and a third embedding layer for encoding identifiers of sentences to which the tokens belong.

The mapping layer may include a CRF (Conditional Random Field) for using implicit vectors output by the transformer layer to predict the information of the spatial relationship included in the text.

A training target of the geographic location point spatial relationship extracting model includes: a prediction of a label in the text made by the mapping layer complies with a mark in the second training data.

Large-scale high-quality training data are needed to train a good model. The above training data simultaneously includes geographic location points and geographic location point spatial relationship information. There are little training data meeting certain requirements for quality, and such training data need to be marked manually. This makes it difficult to acquire high-quality training data. To solve the problem, embodiments of the present disclosure provide a preferred embodiment to train the geographic location point spatial relationship extracting model in a pre-training+fine-tuning manner. During the pre-training, the texts mined from the Internet may be used to constitute first training data. The requirements for the quality of these texts are not high, so a large amount of first training data may be obtained. During the fine-tuning, second training data are constituted by performing manual marking with high-precision texts. These texts are of very high quality in a small amount, and may be further fine-tuned on the basis of model parameters obtained during the pre-training.

In this case, the apparatus further comprises:
the first obtaining unit 03 configured to obtain first training data which includes: a text, and marks of a geographic location point and a geographic location point spatial relationship in the text.

The first training data may be a text mined from the Internet and including keywords of the geographic location point and the geographic location point spatial relationship type as pre-training data. This portion of training data has a low accuracy and belongs to weakly-marked data as compared with manually precisely-marked data. The present disclosure is not limited to the specific manner of mining the text from the Internet. One of the simplest manners is to pre-build a dictionary of keywords of geographic location point spatial relationship types, and use the dictionary and names of geographic location points in the map database to match in massive texts in the Internet to thereby obtain the text. The marking of the geographic location point and the type of the geographic location point spatial relationship in the text may also be achieved based on the above dictionary and the name of the geographic location point in the map database. Since a lot of manual involvement is not needed, the first training data needed in the pre-training may be large-scale and massive data, so that requirements for training a pre-training model can be ensured.

The first training unit 04 is configured to train the pre-training model with the first training data, the pre-training model including: an embedding layer, a transformer layer and at least one task layer.

The second training unit 02 is configured to train the obtained embedding layer and transformer layer based on the pre-training model upon training the geographic location point spatial relationship extracting model with the second training data.

The at least one task layer includes: at least one of a masking prediction task layer, a spatial relationship prediction task layer and a geographic location point prediction task layer.

The masking prediction task layer is used to predict content of a masked portion in the text of the first training data based on the implicit vectors output by the transformer layer, and a training target is to allow a prediction result to comply with actual content corresponding to the masked portion.

The spatial relationship prediction task layer is used to predict the spatial relationship described by the text of the first training data based on the implicit vectors output by the transformer layer, and the training target is to allow a prediction result to comply with a corresponding mark of the spatial relationship.

The geographic location point prediction task layer is used to predict the geographic location point included by the text of the first training data based on the implicit vectors output by the transformer layer, and the training target is to allow the prediction result to comply with a corresponding mark of the geographic location point.

The task layers are trained alternately or simultaneously. The function losses corresponding to the training targets of the trained task layers are used to optimize the model parameters of the embedding layer, the transformer layer and the trained task layers.

The employed manually-marked high-precision training data, namely, the second training data are similar to the large-scale weakly-marked data, namely, the first training data, and the manually-marked high-precision training data has a small scale. Therefore, to reduce an overfitting risk, as a preferred embodiment, the second training unit 02, upon training the geographic location point spatial relationship extracting model with the second training data, uses model parameters of the embedding layer and the transformer layer pre-trained by the pre-training model and keeps the model parameters invariable, and optimizes the model parameters of the mapping layer until the training target of the geographic location point spatial relationship extracting model is reached.

Embodiment 5

FIG. 8 illustrates a structural schematic diagram of an apparatus for extracting a geographic location point spatial relationship according to Embodiment 5 of the present disclosure. As shown in FIG. 8, the apparatus may include: an obtaining unit 11 and an extracting unit 12. Main functions of the units are as follows:
The obtaining unit 11 is configured to obtain a text containing geographic location point information from the Internet.

The extracting unit 12 is configured to input the text into a geographic location point spatial relationship extracting model obtained by pre-training, to obtain information of the spatial relationship output by the geographic location point spatial relationship extracting model; the geographic location point spatial relationship extracting model includes: an embedding layer, a transformer layer and a mapping layer.

The embedding layer includes: a first embedding layer for performing character encoding for tokens in the text, a second embedding layer for performing position encoding for the tokens, and a third embedding layer for encoding identifiers of sentences to which the tokens belong.

The mapping layer includes a CRF for using implicit vectors output by the transformer layer to predict the information of the spatial relationship included in the text.

After the geographic location point spatial relationship is extracted in the manner provided by the embodiments of the present disclosure, a quadruplet format <geographic location point 1, geographic location point 2, a type of the spatial relationship, a value of the spatial relationship> may be employed so that the expression of the spatial relationship is more standard and unified, and systemized calculation, reasoning and storage of the spatial relationship knowledge is made possible.

The following application scenario may be implemented:

The user inputs a query "is there a Starbucks nearby Tsinghua University?. If the database has the following geographic location point spatial relationship: <清华科技园，清华大学东南,门，南，100 米 > (<Tsinghua Sci-Tech Park, Southeastern Gate of Tsinghua University, south, 100 meters>), <威新国际大厦，清华科技园，楼栋,9 (<Vision international Centre, Tsinghua Sci-Tech Park, Building, 9>), and <星巴克，威新国际大厦，楼层,1> (<Starbucks, Vision international Centre, Floor, 1>. Through the reasoning of the three relationships, the following answer may be accurately provided: "there is a Starbucks on Floor #1, Vision international Centre, Tsinghua Sci-Tech Park, 100 meters to the south of Southeastern Gate of Tsinghua University", and a corresponding geographic location "星巴克"("Starbucks") is provided.

According to embodiments of the present disclosure, the present disclosure further provides an electronic device and a readable storage medium.

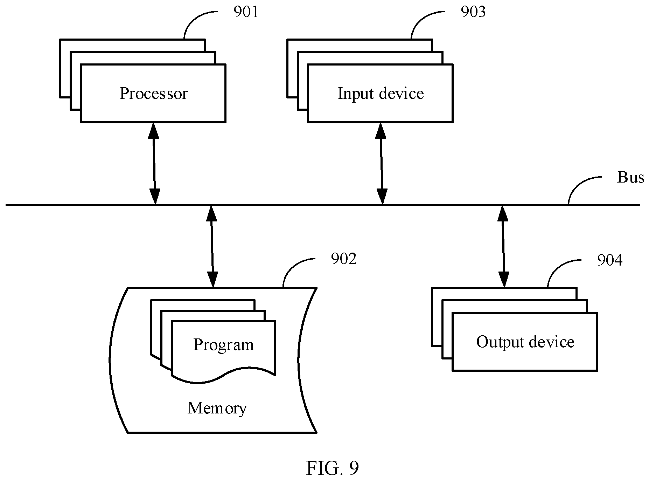

As shown in FIG. 9, it shows a block diagram of an electronic device for implementing the method according to embodiments of the present disclosure. The electronic device is intended to represent various forms of digital computers, such as laptops, desktops, workstations, personal digital assistants, servers, blade servers, mainframes, and other appropriate computers. The electronic device is further intended to represent various forms of mobile devices, such as personal digital assistants, cellular telephones, smartphones, wearable devices and other similar computing devices. The components shown here, their connections and relationships, and their functions, are meant to be exemplary only, and are not meant to limit implementations of the inventions described and/or claimed in the text here.

As shown in FIG. 9, the electronic device comprises: one or more processors 901, a memory 902, and interfaces configured to connect components and including a high-speed interface and a low speed interface. Each of the components are interconnected using various buses, and may be mounted on a common motherboard or in other manners as appropriate. The processor can process instructions for execution within the electronic device, including instructions stored in the memory or on the storage device to display graphical information for a GUI on an external input/output device, such as a display device coupled to the interface. In other implementations, multiple processors and/or multiple buses may be used, as appropriate, along with multiple memories and types of memory. Also, multiple electronic devices may be connected, with each device providing portions of the necessary operations (e.g., as a server bank, a group of blade servers, or a multi-processor system). One processor 901 is taken as an example in FIG. 9.

The memory 902 is a non-transitory computer-readable storage medium provided by the present disclosure. The memory stores instructions executable by at least one processor, so that the at least one processor executes the method according to the present disclosure. The non-transitory computer-readable storage medium of the present disclosure stores computer instructions, which are used to cause a computer to execute the method according to the present disclosure.

The memory 902 is a non-transitory computer-readable storage medium and can be used to store non-transitory software programs, non-transitory computer executable programs and modules, such as program instructions/modules corresponding to the method in embodiments of the present disclosure. The processor 901 executes various functional applications and data processing of the server, i.e., implements the method in the above method embodiments, by running the non-transitory software programs, instructions and modules stored in the memory 902.

The memory 902 may include a storage program region and a storage data region, wherein the storage program region may store an operating system and an application program needed by at least one function; the storage data region may store data created according to the use of the electronic device. In addition, the memory 902 may include a high-speed random access memory, and may also include a non-transitory memory, such as at least one magnetic disk storage device, a flash memory device, or other non-transitory solid-state storage device. In some embodiments, the memory 902 may optionally include a memory remotely arranged relative to the processor 901, and these remote memories may be connected to the electronic device through a network. Examples of the above network include, but are not limited to, the Internet, an intranet, a local area network, a mobile communication network, and combinations thereof.

The electronic device may further include an input device 903 and an output device 904. The processor 901, the memory 902, the input device 903 and the output device 904 may be connected through a bus or in other manners. In FIG. 9, the connection through the bus is taken as an example.

The input device 903 may receive inputted numeric or character information and generate key signal inputs related to user settings and function control of the electronic device, and may be an input device such as a touch screen, keypad, mouse, trackpad, touchpad, pointing stick, one or more mouse buttons, trackball and joystick. The output device 904 may include a display device, an auxiliary lighting device (e.g., an LED), a haptic feedback device (for example, a vibration motor), etc. The display device may include but not limited to a Liquid Crystal Display (LCD), a Light Emitting Diode (LED) display, and a plasma display. In some embodiments, the display device may be a touch screen.

Various implementations of the systems and techniques described here may be realized in digital electronic circuitry, integrated circuitry, specially designed ASICs (Application Specific Integrated Circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to send data and instructions to, a storage system, at least one input device, and at least one output device.

These computer programs (also known as programs, software, software applications or code) include machine instructions for a programmable processor, and may be implemented in a highlevel procedural and/or object-oriented programming language, and/or in assembly/machine language. As used herein, the terms "machine-readable medium" and "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

It should be understood that the various forms of processes shown above can be used to reorder, add, or delete steps. For example, the steps described in the present disclosure can be performed in parallel, sequentially, or in different orders as long as the desired results of the technical solutions disclosed in the present disclosure can be achieved, which is not limited herein.

The foregoing specific implementations do not constitute a limitation on the protection scope of the present disclosure. It should be understood by those skilled in the art that various modifications, combinations, sub-combinations and substitutions can be made according to design requirements and other factors. Any modification, equivalent replacement and improvement made within the spirit and principle of the present disclosure shall be included in the protection scope of the present disclosure.

## Claims

1. A method for training a geographic location point spatial relationship extracting model, comprising:

   obtaining second training data which include: a text, and marks of a geographic location point and geographic location point spatial relationship information in the text;
   training a geographic location point spatial relationship extracting model with the second training data, the geographic location point spatial relationship extracting model comprising an embedding layer, a transformer layer and a mapping layer;

wherein the trained geographic location point spatial relationship extracting model is used to extract the geographic location point spatial relationship information from the input Internet text.

2. The method according to claim 1, wherein the embedding layer comprises: a first embedding layer for performing character encoding for tokens in the text, a second embedding layer for performing position encoding for the tokens, and a third embedding layer for encoding identifiers of sentences to which the tokens belong;
the mapping layer comprises a Conditional Random Field CRF for using implicit vectors output by the transformer layer to predict the information of the spatial relationship included in the text.

3. The method according to claim 1, wherein a training target of the geographic location point spatial relationship extracting model comprises: a prediction of a label in the text made by the mapping layer complies with a mark in the second training data.

4. The method according to any one of claims 1-3, wherein before training a geographic location point spatial relationship extracting model with the second training data, the method further comprises:

obtaining first training data which comprises: the text, and marks of the geographic location point and the geographic location point spatial relationship in the text;
training a pre-training model with the first training data, the pre-training model comprising: an embedding layer, a transformer layer and at least one task layer; the embedding layer further comprises: a fourth embedding layer for encoding an identifier of a task layer to which the input text is used;
training the obtained embedding layer and transformer layer based on the pre-training model upon training the geographic location point spatial relationship extracting model with the second training data.

5. The method according to claim 4, wherein the at least one task layer comprises: at least one of a masking prediction task layer, a spatial relationship prediction task layer and a geographic location point prediction task layer;

the masking prediction task layer is used to predict content of a masked portion in the text of the first training data based on the implicit vectors output by the transformer layer, and a training target is to allow a prediction result to comply with actual content corresponding to the masked portion;
the spatial relationship prediction task layer is used to predict the spatial relationship described by the text of the first training data based on the implicit vectors output by the transformer layer, and the training target is to allow a prediction result to comply with a corresponding mark of the spatial relationship;
the geographic location point prediction task layer is used to predict the geographic location point included by the text of the first training data based on the implicit vectors output by the transformer layer, and the training target is to allow the prediction result to comply with a corresponding mark of the geographic location point.

6. The method according to claim 4, wherein the at least one task layer are trained alternately or simultaneously, and function losses corresponding to the training targets of the trained task layers are used to optimize model parameters of the embedding layer, the transformer layer and the trained task layers.

7. The method according to claim 4, wherein the training the obtained embedding layer and transformer layer based on the pre-training model upon training the geographic location point spatial relationship extracting model with the second training data comprises:
upon training the geographic location point spatial relationship extracting model with the second training data, using model parameters of the embedding layer and the transformer layer pre-trained by the pre-training model and keeps the model parameters invariable, and optimizing the model parameters of the mapping layer until the training target of the geographic location point spatial relationship extracting model is achieved.

8. A method for extracting a geographic location point spatial relationship, comprising:

obtaining a text containing geographic location point information from the Internet;
inputting the text into a geographic location point spatial relationship extracting model obtained by pre-training, to obtain information of the spatial relationship output by the geographic location point spatial relationship extracting model; wherein the geographic location point spatial relationship extracting model comprises: an embedding layer, a transformer layer and a mapping layer.

9. The method according to claim 8, wherein the embedding layer comprises: a first embedding layer for performing character encoding for tokens in the text, a second embedding layer for performing position encoding for the tokens, and a third embedding layer for encoding identifiers of sentences to which the tokens belong;
the mapping layer comprises a Conditional Random Field CRF for using implicit vectors output by the transformer layer to predict the information of the spatial relationship included in the text.

10. The method according to claim 8 or 9, wherein the information of the spatial relationship comprises: a type and a value of the spatial relationship.

11. An apparatus for training a geographic location point spatial relationship extracting model, comprising:

a second obtaining unit configured to obtain second training data which include: a text, and marks of a geographic location point and geographic location point spatial relationship information in the text;
a second training unit configured to train a geographic location point spatial relationship extracting model with the second training data, the geographic location point spatial relationship extracting model comprising an embedding layer, a transformer layer and a mapping layer;
the geographic location point spatial relationship extracting model is used to extract the geographic location point spatial relationship information from the input text.

12. The apparatus according to claim 11, wherein the embedding layer comprises: a first embedding layer for performing character encoding for tokens in the text, a second embedding layer for performing position encoding for the tokens, and a third embedding layer for encoding identifiers of sentences to which the tokens belong;
the mapping layer comprises a Conditional Random Field CRF for using implicit vectors output by the transformer layer to predict the information of the spatial relationship included in the text.

13. The apparatus according to claim 11, wherein a training target of the geographic location point spatial relationship extracting model comprises: a prediction of a label in the text made by the mapping layer complies with a mark in the second training data.

14. The apparatus according to any one of claims 11-13, further comprising:

a first obtaining unit configured to obtain first training data which comprises: the text, and marks of the geographic location point and the geographic location point spatial relationship in the text;
a first training unit configured to train a pre-training model with the first training data, the pre-training model comprising: an embedding layer, a transformer layer and at least one task layer; the embedding layer further comprises: a fourth embedding layer for encoding an identifier of a task layer to which the input text is used;
the second training unit is configured to train the obtained embedding layer and transformer layer based on the pre-training model upon training the geographic location point spatial relationship extracting model with the second training data.

15. The apparatus according to claim 14, wherein the at least one task layer comprises: at least one of a masking prediction task layer, a spatial relationship prediction task layer and a geographic location point prediction task layer;

the masking prediction task layer is used to predict content of a masked portion in the text of the first training data based on the implicit vectors output by the transformer layer, and a training target is to allow a prediction result to comply with actual content corresponding to the masked portion;
the spatial relationship prediction task layer is used to predict the spatial relationship described by the text of the first training data based on the implicit vectors output by the transformer layer, and the training target is to allow a prediction result to comply with a corresponding mark of the spatial relationship;
the geographic location point prediction task layer is used to predict the geographic location point included by the text of the first training data based on the implicit vectors output by the transformer layer, and the training target is to allow the prediction result to comply with a corresponding mark of the geographic location point.

16. The apparatus according to claim 14, wherein the at least one task layer are trained alternately or simultaneously, and function losses corresponding to the training targets of the trained task layers are used to optimize model parameters of the embedding layer, the transformer layer and the trained task layers.

17. The apparatus according to claim 14, wherein the second training unit is specifically configured to: upon training the geographic location point spatial relationship extracting model with the second training data, use model parameters of the embedding layer and the transformer layer pre-trained by the pre-training model and keeps the model parameters invariable, and optimizes the model parameters of the mapping layer until the training target of the geographic location point spatial relationship extracting model is achieved.

18. An apparatus for extracting a geographic location point spatial relationship, comprising:

an obtaining unit configured to obtain a text containing geographic location point information from the Internet;
an extracting unit configured to input the text into a geographic location point spatial relationship extracting model obtained by pre-training, to obtain information of the spatial relationship output by the geographic location point spatial relationship extracting model; wherein the geographic location point spatial relationship extracting model comprises: an embedding layer, a transformer layer and a mapping layer.

19. The apparatus according to claim 18, wherein the embedding layer comprises: a first embedding layer for performing character encoding for tokens in the text, a second embedding layer for performing position encoding for the tokens, and a third embedding layer for encoding identifiers of sentences to which the tokens belong;
the mapping layer comprises a Conditional Random Field CRF for using implicit vectors output by the transformer layer to predict the information of the spatial relationship included in the text.

20. An electronic device, wherein the electronic device comprises:

at least one processor; and
a memory communicatively connected with the at least one processor; wherein,
the memory stores instructions executable by the at least one processor, and the instructions are executed by the at least one processor to cause the at least one processor to perform the method according to any one of claims 1-10.

21. A non-transitory computer-readable storage medium storing computer instructions therein, wherein the computer instructions are used to cause the computer to perform the method according to any one of claims 1-10.

101

Terminal device

103

104

105

102

Terminal device

FIG. 1

201

Obtain a text containing geographic location point information from the Internet

202

Input text into a geographic location point spatial relationship extracting model obtained by pre-training, to obtain information of spatial relationship output by the model; where the model includes an embedding layer, a transformer layer and a mapping layer

FIG. 2

O POI_B POI_I POI_I O O O O O O O O O O O POI_B POI_I POI_I POI_I POI_I POI_I POI_I VAL_B LOF_B O

[CLS] 海 底 捞 [SEP] 北 京 市 海 淀 区 清 河 中 街 五 彩 城 购 物 中 心 6 层 [SEP]

CRF

multi-layer transformer

Token Embedding [CLS] 海 底 捞 [SEP] 北 京 市 海 淀 区 清 河 中 街 五 彩 城 购 物 中 心 6 层 [SEP]

\+ + + + + + + + + + + + + + + + + + + + + + + + +

Position Embedding 0 1 2 3 4 5 6 7 8 9 10 11 12 13 14 15 16 17 18 19 20 21 22 23 23

\+ + + + + + + + + + + + + + + + + + + + + + + + +

Sentence Embedding 1 1 1 1 1 2 2 2 2 2 2 2 2 2 2 2 2 2 2 2 2 2 2 2 2

FIG. 3

401

Obtain training data which include: a text and marks of a geographic location point and information of a geographic location point spatial relationship in the text

402

Train the geographic location point spatial relationship extracting model with the training data, wherein the model includes an embedding layer, a transformer layer and a mapping layer, a training target includes: a prediction of a label of the text in training data made by mapping layer complies with a mark in training data

FIG. 4

501

Obtain first training data which include: a text and
marks of a geographic location point and a
geographic location point spatial relationship in the
text

502

Use the first training data to train a pre-training
model, the pre-training model including an
embedding layer, a transformer layer and at least
one task layer

503

Obtain second training data which include: a text,
and marks of a geographic location point and a
type and a value of the geographic location point
spatial relationship in the text

504

Train the obtained embedding layer and
transformer layer based on pre-training model,
train geographic location point spatial relationship
extracting model with second training data, the
extracting model including embedding layer,
transformer layer and mapping layer

FIG. 5

Mask language model task | Spatial position classification task | Geographic location prediction task

multi-layer transformer

| | | | | | | | | | | | | | | | | | | | | | | | |
|---|---|---|---|---|---|---|---|---|---|---|---|---|---|---|---|---|---|---|---|---|---|---|---|
Token Embedding | [CLS] | 海 | 底 | 捞 | [SEP] | 北 | 京 | 市 | 海 | 淀 | 区 | 清 | 河 | 中 | 街 | 五 | 彩 | 城 | 购 | 物 | 中 | 心 | 6 | 层 | [SEP] |

Position Embedding: 0 1 2 3 4 5 6 7 8 9 10 11 12 13 14 15 16 17 18 19 20 21 22 23 23

Sentence Embedding: 1 1 1 1 1 2 2 2 2 2 2 2 2 2 2 2 2 2 2 2 2 2 2 2 2

Task Embedding: 2 2 2 2 2 2 2 2 2 2 2 2 2 2 2 2 2 2 2 2 2 2 2 2 2

FIG. 6A

O POI_B POI_I POI_I O O O O O O O O O O O POI_B POI_I POI_I POI_I POI_I POI_I POI_I VAL_B LOF_B O

[CLS] 海 底 捞 [SEP] 北 京 市 海 淀 区 清 河 中 街 五 彩 城 购 物 中 心 6 层 [SEP]

CRF

multi-layer transformer

Token Embedding: [CLS] 海 底 捞 [SEP] 北 京 市 海 淀 区 清 河 中 街 五 彩 城 购 物 中 心 6 层 [SEP]

Position Embedding: 0 1 2 3 4 5 6 7 8 9 10 11 12 13 14 15 16 17 18 19 20 21 22 23 23

Sentence Embedding: 1 1 1 1 1 2 2 2 2 2 2 2 2 2 2 2 2 2 2 2 2 2 2 2 2

Task Embedding: 2 2 2 2 2 2 2 2 2 2 2 2 2 2 2 2 2 2 2 2 2 2 2 2 2

FIG. 6B

03

First obtaining unit

First training data

04

First training unit

Pre-training model

01

Second obtaining unit

Second training data

02

Second training unit

Spatial relationship extracting model

FIG. 7

11

Obtaining unit

12

Extracting unit

Spatial relationship extracting model

FIG. 8

901

Processor

903

Input device

Bus

902

Program

Memory

904

Output device

FIG. 9

## INTERNATIONAL SEARCH REPORT

| International application No. |
| --- |
| **PCT/CN2020/131305** |

| A. | CLASSIFICATION OF SUBJECT MATTER |
| --- | --- |

G06F 16/29(2019.01)i

According to International Patent Classification (IPC) or to both national classification and IPC

| B. | FIELDS SEARCHED |
| --- | --- |

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

EPODOC, WPI, CNPAT, CNKI, IEEE, GOOGLE: 训练, 地理位置, 空间, 模型, 标注, 嵌入层, 映射层, 条件随机场, training, location, space, model, label, embedded layer, mapping layer, CRF

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 111737383 A (BAIDU ONLINE NETWORK TECHNOLOGY (BEIJING) CO., LTD.) 02 October 2020 (2020-10-02) claims 1-21 | 1-21 |
| X | CN 108920457 A (TENCENT DADI TONGTU (BEIJING) TECHNOLOGY CO., LTD. et al.) 30 November 2018 (2018-11-30) description paragraphs 0028-0056, 0081-0106, figures 1-9 | 1-21 |
| A | CN 110851738 A (BAIDU ONLINE NETWORK TECHNOLOGY (BEIJING) CO., LTD.) 28 February 2020 (2020-02-28) entire document | 1-21 |
| A | CN 110457420 A (TENCENT CLOUD COMPUTING (BEIJING) CO., LTD.) 15 November 2019 (2019-11-15) entire document | 1-21 |
| A | CN 109753566 A (DALIAN MINZU UNIVERSITY) 14 May 2019 (2019-05-14) entire document | 1-21 |
| A | CN 110716999 A (WUHAN UNIVERSITY) 21 January 2020 (2020-01-21) entire document | 1-21 |

☑ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 February 2021** | **01 March 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/131305**

**C.    DOCUMENTS CONSIDERED TO BE RELEVANT**

| Category* | Citation of document, with indication, where appropriate, of the relevant passages | Relevant to claim No. |
|---|---|---|
| A | US 2009177460 A1 (FLUENTIAL, INC.) 09 July 2009 (2009-07-09)<br>entire document | 1-21 |

Form PCT/ISA/210 (second sheet) (January 2015)

**INTERNATIONAL SEARCH REPORT**
Information on patent family members

International application No.

**PCT/CN2020/131305**

| Patent document cited in search report | | | Publication date (day/month/year) | Patent family member(s) | Publication date (day/month/year) |
|---|---|---|---|---|---|
| CN | 111737383 | A | 02 October 2020 | None | |
| CN | 108920457 | A | 30 November 2018 | None | |
| CN | 110851738 | A | 28 February 2020 | None | |
| CN | 110457420 | A | 15 November 2019 | None | |
| CN | 109753566 | A | 14 May 2019 | None | |
| CN | 110716999 | A | 21 January 2020 | None | |
| US | 2009177460 | A1 | 09 July 2009 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020104382142